# FASCICULE DE BREVET EUROPEEN

(11) **EP 2 895 536 B1**
(45) Date de publication et mention de la délivrance du brevet: **14.06.2017**
(21) Numéro de dépôt: 13765378.8
(22) Date de dépôt: 06.09.2013
(51) Int. Cl.: C08J 3/24, C08K 5/01, C08K 5/101, C08K 5/14, C08K 5/23, C08K 5/34, C08L 23/06, H01B 7/04

(54) **MELANGE PRIMAIRE D'INITIATEUR ET DE PROMOTEUR DE RETICULATION**
PRIMÄRE MISCHUNG AUS EINEM VERNETZUNGSINITIATOR UND EINEM PROMOTOR
PRIMARY MIXTURE OF CROSSLINKING INITIATOR AND PROMOTER

(30) Priorité: 12.09.2012 FR 1258569
(43) Date de publication de la demande: 22.07.2015
(73) Titulaire: Arkema France, 92700 Colombes (FR)
(72) Inventeur: DEFRANCISCI, Alfredo, F-69003 Lyon (FR); DEBAUD, Fabien, F-69005 Lyon (FR)
(74) Mandataire: Gorintin, Sarah
(86) Numéro de dépôt international: PCT/FR2013/052059
(87) Numéro de publication internationale: WO 2014/041287

(56) Documents cités:
- FR-A1- 2 392 072

## Description

### Domaine de l'invention

L'invention a pour objet l'imprégnation de granulés de polymère (composition) par un mélange d'initiateur de radicaux libres préalablement solubilisé dans un promoteur de réticulation (mélange primaire). L'invention se rapporte également à un procédé de fabrication de polymère réticulé préalablement imprégné par un mélange d'initiateur de radicaux libres solubilisé dans un promoteur de réticulation.

L'initiateur de radicaux libres est choisi parmi les peroxydes organiques, les azoïques et leurs mélanges.

Les initiateurs de radicaux libres, se décomposent thermiquement, produisant des radicaux libres. Ils permettent de donner à de nombreux polymères, et plus particulièrement aux caoutchoucs et aux polyoléfines d'excellentes caractéristiques mécaniques, thermiques et chimiques, grâce à la formation de liaisons covalentes entre les chaînes de polymères. Cette opération est appelée réticulation. Dans le cas d'une réticulation avec des peroxydes utilisés sans promoteur, une liaison de réticulation est une liaison carbone-carbone entre les chaînes adjacentes du polymère.

Des réactions prématurées de réticulation diminuent les propriétés viscoélastiques du polymère, de sorte que le matériau ne peut plus être transformé de manière adéquate et induisent la formation de particules de gel conduisant à une inhomogénéité du matériau.

Afin de prévenir une décomposition prématurée dudit initiateur de radicaux libres, il convient de mélanger l'initiateur de radicaux libres au polymère à une température ne dépassant pas le point de fusion du polymère.

Ce procédé d'imprégnation de l'initiateur de radicaux libres dans des granulés de polymère représente souvent l'étape limitante dans la production de ces granulés de polymère. En effet, il est souvent nécessaire que cette étape ait lieu à une certaine température et pendant un certain temps afin de garantir une imprégnation homogène de ces granulés. Il est ainsi impératif de pouvoir réduire au maximum ce temps d'imprégnation.

Quand l'initiateur de radicaux libres à température ambiante est à l'état solide, il nécessite donc d'être généralement chauffé au dessus de sa température de fusion pour pouvoir être incorporé sous sa forme liquide à une matrice polymérique.

Avant d'être transformé en produit fini soit par des procédés d'extrusion ou d'injection, les granulés de polymères doivent pouvoir être stockées pendant plusieurs mois sans que l'agent réticulant ne désorbe desdits granulés. Afin d'éviter une inhomogénéité de composition du produit, le temps de désorption doit être le plus long possible.

La quantité d'initiateur de radicaux libres, généralement des peroxydes organiques, nécessaire à la réticulation de polymères est suffisamment élevée pour créer des problèmes de génération importante de COV (Composé Organique Volatile). En effet, les réactions de réticulation tendent à libérer des produits volatils issus de la décomposition des peroxydes organiques. En fonction des performances souhaitées, un long processus de dégazage est ensuite nécessaire après la production des produits finis pour éliminer certains de ces produits volatils, et plus particulièrement le méthane dans le cas d'applications de type câblerie électrique.

### Etat de l'art

Aucun des documents de l'état de la technique ne permet à l'heure actuelle de résoudre l'ensemble des problèmes techniques énoncés ci-dessus.

Le document US 3455752 divulgue un mélange de polyéthylène et de peroxyde de dicumyle préalablement fondu pour la production de polyéthylène réticulé pour l'enrobage de câble électrique.

Bien que ce mode de procédé permette l'imprégnation de peroxyde organique dans des particules de polymères, ce procédé n'est pas satisfaisant en termes de capacité de rétention, le peroxyde se désorbe les jours suivants l'imprégnation.

Les réactions d'oxydations des peroxydes organiques peuvent être inhibées par la présence d'antioxydant. Le document US 4101512 divulgue la dissolution d'un antioxydant dans le peroxyde de dicumyle préalablement fondu. Ce mélange est ensuite ajouté à des granulés de polyéthylène dans des applications d'enrobage de câble électrique.

Le document US 7160958 divulgue un mélange de peroxyde organique avec un additif promoteur d'absorption dans des particules de polymère à une température supérieure au point de fusion du peroxyde organique et en dessous de la température de transition vitreuse du polymère.

Le procédé décrit dans ce document US 7160958 semble permettre une augmentation de la vitesse d'absorption du peroxyde dans les granulés de polymère, mais seulement dans les premières minutes de l'imprégnation, alors qu'il est connu que l'imprégnation complète du polymère est généralement atteinte en plusieurs heures, pour permettre au peroxyde de diffuser uniformément à l'intérieur des granulés de polyéthylène. On note également que le mode opératoire décrit explicitement ne se distingue en rien des documents de l'art antérieur, à savoir que le ou les initiateurs de radicaux libres, un éventuel promoteur de réticulation et le polymère sont mélangés au même instant ou dans un laps de temps court, voire très court.

Par ailleurs dans ce document, le peroxyde de dicumyle est ajouté à l'état solide dans les granulés de polyéthylène. Dans l'industrie cette procédure de mise en oeuvre n'est, à l'heure actuelle, plus utilisée en raison du risque de mauvaise absorption que cette procédure risque d'entrainer.

On connait également le document FR 7815556 qui divulgue une composition thermoplastique, caractérisée en ce qu'elle comprend :
- 100 à 5 parties en poids de (A) une composition d'élastomère partiellement vulcanisé obtenue par un traitement thermique dynamique, en présence d'un peroxyde organique, d'un mélange de 100 à 40 parties en poids de (a) un caoutchouc de copolymère d'oléfine vulcanisable par les peroxydes,
- 0 à 60 parties en poids de (b) une matière plastique oléfinique décomposée par les peroxydes,
- la somme du constituant (a) du constituant (b) étant de 100 parties en poids, et
- 5 à 100 parties en poids d'au moins un produit choisi parmi (c) une matière caoutchouteuse hydrocarbonée non vulcanisable par les peroxydes et
- (d) un plastifiant du type huile minérale ; et
- 0 à 95 parties en poids de (B) une matière plastique oléfinique ; la somme du constituant (b) et du constituant (B) ne représentant pas moins de 5 parties en poids pour 100 parties en poids de la composition finale.

Mais dans tous les exemples divulgués dans ce document, le rapport en poids peroxyde organique au promoteur de réticulation est très inférieur à 1 (de l'ordre de 0,6), ce qui change fondamentalement les propriétés physico-chimiques de la composition.

### Brève description de l'invention

Il a été constaté, après diverses expériences et manipulations, que la dissolution préalable d'initiateur de radicaux libres dans un promoteur de réticulation avant l'imprégnation de ce mélange dans des granulés de polymères par rapport à l'utilisation d'un peroxyde seul (sans dissolution préalable dans un promoteur de réticulation, éventuellement ajouté ultérieurement) présente les avantages suivants :
- le mélange d'initiateur de radicaux libres et de promoteur de réticulation est soit liquide à température ambiante, soit liquide à la température d'imprégnation du polyéthylène, c'est-à-dire à une température légèrement supérieure à la température ambiante ;
- le temps d'imprégnation (de l'initiateur de radicaux libres dans le polyéthylène) est nettement réduit, pouvant être dans certains cas divisé par deux par rapport à l'utilisation d'initiateur de radicaux libres non solubilisé dans le promoteur de réticulation ;
- le mélange d'initiateur de radicaux libres et de promoteur de réticulation ne se désorbe pas du polymère, ou avec une cinétique très significativement inférieure par rapport aux procédés de l'état de la technique ;
- la quantité d'initiateur de radicaux libres nécessaires est significativement réduite, cette réduction pouvant atteindre quarante pour cent (40%) tout en conservant une densité de réticulation équivalente à celle des procédés de l'état de la technique ;
- la libération de produits volatils est elle aussi significativement réduite, à l'image de la quantité d'initiateurs de radicaux libres, cette réduction peut atteindre 40 %, par rapport à l'utilisation de peroxyde organique non solubilisé préalablement avec le promoteur de réticulation.

La dissolution de l'initiateur de radicaux libres dans un promoteur de réticulation afin de former le mélange primaire est une opération préalable réalisée dans un temps variable selon le couple peroxyde/promoteur choisi ainsi que de la température de mélangeage, pouvant aller de quelques minutes à plusieurs heures. La dissolution et l'homogénéisation du mélange primaire est une étape indispensable pour garantir les meilleurs résultats d'imprégnation du mélange primaire dans le polymère.

Ainsi la présente invention concerne un mélange primaire destiné à la réticulation de polyéthylène, comprenant au moins un initiateur de radicaux libres choisi parmi les peroxydes organiques, les azoïques ou leurs mélanges caractérisé en ce qu'il consiste en ledit initiateur de radicaux libres et au moins un promoteur de réticulation choisi parmi les cycloalcanes ayant 5 à 7 atomes de carbone, substitués par 1 à 3 groupements vinyle, allyle ou isopropenyl, les composés aromatiques substitués par 1 à 3 groupements vinyle, allyle ou isopropenyl, les monomères à base de méthacrylate, d'acrylate, maléimide, multi-substitués et en ce que le rapport en poids d'initiateur de radicaux libres au promoteur de réticulation est supérieur ou égal à 1, de préférence entre 1,5 et 4.

D'autres caractéristiques et particularités du mélange primaire de l'invention sont présentées ci-après :
- de préférence, le promoteur de réticulation est le trivinylcycloalcane et/ou divinylbenzène ;
- de préférence, l'initiateur de radicaux libres est le peroxyde de dicumyle, le 2, 5-diméthyl-2,5 di(t-butylperoxy)hexane ou le di-[(t-butyl-peroxy)isopropyl]benzène ou un mélanges de ces initiateurs ;
- selon une particularité propre à l'invention, le mélange primaire se présente sous forme liquide à température ambiante, soit au moins pour une température comprise entre 10 °C et 50 °C à pression ambiante (1 bar).

L'invention se rapporte également à une composition pour la réticulation de polyéthylène, comportant du polyéthylène, de préférence du polyéthylène basse densité, caractérisée en ce qu'elle comprend en outre un mélange primaire tel que décrit ci-dessus. Cette composition est entendue ici de l'ensemble des composants (initiateur de radicaux libres, promoteur de réticulation et polyéthylène) avant que le polyéthylène ne réticule.

Selon une possibilité offerte par l'invention, la composition selon l'invention comprend en outre au moins un agent de protection UV, un agent de mise en oeuvre, un agent anti-buée, un agent anti-bloquant, un agent de couplage, un pigment, un colorant, un plastifiant, un fluidifiant, un retardateur de flamme et/ou un retardateur de réticulation.

L'invention concerne aussi un procédé de fabrication de polyéthylène réticulé, comportant une étape finale de réticulation de polyéthylène, dans lequel :
- un initiateur de radicaux libres est choisi parmi peroxydes organiques, les azoïques ou leurs mélanges, de préférence ledit initiateur est choisi parmi le peroxyde de dicumyle, le 2, 5-diméthyl-2,5 di(t-butylperoxy)hexane ou le di-[(t-butyl-peroxy)isopropyl]benzène ou un mélange de ces initiateurs, et dans lequel
- au moins un promoteur de réticulation est choisi parmi les cycloalcanes ayant 5 à 7 atomes de carbone, substitués par 1 à 3 groupements vinyle, allyle ou isopropenyl, les composés aromatiques substitués par 1 à 3 groupements vinyle, allyle ou isopropenyl, les monomères à base de méthacrylate, d'acrylate, maléimide, multi-substitués, de préférence ledit promoteur est choisi parmi le trivinylcycloalcane et/ou divinylbenzène,
caractérisé en ce qu'on réalise initialement une étape de dilution du susdit initiateur de radicaux libres avec le susdit promoteur de réticulation, puis on réalise l'imprégnation du mélange primaire ainsi formé (tel que décrit ci-dessus), sous forme liquide, avec du polyéthylène.

Selon une possibilité offerte par l'invention, lors de la susdite étape de dilution, le promoteur de réticulation est présent sous forme liquide à température et pression ambiante, c'est-à-dire pour une température comprise entre 10 °C et 50 °C à une pression de 1 bar.

Avantageusement, l'étape de réticulation est réalisée par extrusion ou par injection.

Enfin, la présente invention concerne l'utilisation du mélange primaire tel que décrit ci-dessus ou de la composition susmentionnée pour la production de câbles, notamment pour le transport de fluide ou de courant électrique.

La description qui va suivre est donnée uniquement à titre illustratif et non limitatif.

### Description détaillée de l'invention

La présente invention est destinée à la réticulation de polymère. Le polymère selon l'invention peut être tout type de polymère pouvant être réticulé par des péroxydes organiques, la présente invention étant plus particulièrement destinée à la réticulation de polyéthylène.

S'agissant du polyéthylène, il est entendu que sont inclus les polyéthylènes haute densité (PE-HD), les polyéthylènes basse densité (PE-LD), les polyéthylènes linéaire basse densité (LLDPE), les polyéthylènes très basse densité (VLDPE), les polyéthylènes obtenus par catalyse métallocène, les copolymères de l'éthylène avec un ou plusieurs co-monomères, tels que l' éthylène-propylène-diène terpolymères (EPDM), les éthylène-propylène copolymères (EPM), les copolymères d'éthylène-acétate de vinyle (EVA), les copolymères d'éthylène-acrylate d'alkyle (EMA, EEA, EBA), les copolymères d'éthylène-(alpha-oméga) alkadiènes.

Les autres polymères concernés par la présente invention sont les copolymères butadiène-acrylonitrile hydrogénés (HNBR), les copolymères butadiène-acrylonitrile (NBR), les fluoroélastomères (FKM), les polybutadiènes (PBU). Les polymères tels que les polyéthylènes haute densité, les polyéthylènes basse densité et les copolymères d'éthylène- propylène sont particulièrement préférés. Néanmoins, dans le cadre spécifique de la réticulation de polyéthylène et pour cette invention, les polyéthylènes basse densité seront choisis de façon préférentielle.

S'agissant de l'initiateur de radicaux libres, il est entendu les peroxydes organiques, et plus particulièrement les peroxydes organiques utilisés comme agents de réticulation tels que les peroxydes de dialkyle, les diperoxycétals et certains monoperoxycarbonates, auxquels on peut ajouter les composés azoïques. L'initiateur de radicaux libres du mélange primaire selon l'invention pourra consister en ou plusieurs peroxydes organiques et/ou composés azoïques.

Parmi les peroxydes de dialkyle, les initiateurs préférés sont : peroxyde de dicumyle (commercialisé Luperox^{®} DC ou Luperox^{®} DCP), peroxyde de di-t-butyle (Luperox^{®} DI), peroxyde de t-butylcumyle (Luperox^{®} 801), le 2,5-diméthyl-2,5-di(t-butylperoxy)hexane (Luperox^{®} 101), 2,5-diméthyl-2,5-di(t-amylperoxy)-hexane, 2,5-diméthyl-2,5-di(t-butylperoxy)hexyne-3 (Luperox^{®} 130), 2,5-diméthyl-2,5-di(t-amylperoxy)hexyne-3, α,α'-di-[(t-butyl-peroxy)isopropyl] benzène (Luperox^{®} F), α,α'-di-[(t-amyl-peroxy)isopropyl] benzène (Luperox^{®} 180), peroxyde de di-t-amyle (Luperox^{®} DTA), 1,3,5-tri-[(t-butylperoxy)isopropyl]benzène, 1,3-diméthyl-3-(t-butylperoxy)butanol, 1,3-diméthyl-3-(t -amylperoxy) butanol. Le mélange de peroxyde de dicumyle et de 1,3 et 1,4-isopropylcumyl cumyl peroxyde (Luperox^{®} DC60) est également intéressant.

Certains monoperoxycarbonates tels que le OO-tert-butyl-O-(2-éthylhexyl) monoperoxycarbonate (Luperox^{®} TBEC), OO-tert-butyl-O-isopropyl monoperoxycarbonate (Luperox^{®} TBIC) et OO-tert-amyl-O-2-éthyl hexyl monoperoxycarbonate (Luperox^{®} TAEC), sont également utilisés.

Parmi les peroxydes de diacyles, l'initiateur préféré est le peroxyde de Benzoyle (Luperox^{®} A75).

Parmi les diperoxycétals, les initiateurs préférés sont : 1,1-di-(t-butylperoxy)-3,3,5-triméthylcyclohexane (Luperox^{®} 231), 4,4-di-(t-amylperoxy)valérate de n-butyle (Luperox^{®} 230), 3,3-di-(t-butylperoxy)butyrate d'éthyle (Luperox^{®} 233), 2,2-di-(t-amylperoxy)-propane, 3,6,6,9,9-pentaméthyl-3-éthoxycarbonylméthyl-1,2,4,5-tétraoxacyclononane, 3,3,5,7,7-,pentamethyl-1,2,4-trioxepane, 4,4-bis(t-butylperoxy)valérate de n-butyle, 3,3-di(t-amylperoxy)butyrate d'éthyle, 1,1-di(t-butylperoxy)cyclohexane (Luperox^{®} 331), 1,1-di(t-amylperoxy)cyclohexane (Luperox^{®} 531) et leurs mélanges.

Comme composés azoïques, on peut citer à titre d'exemple le 2,2'-azobis-(2-acétoxypropane), l'azobisisobutyronitrile, l'azodicarbamide, le 4,4'-azobis acide cyanopentanoïque et le 2,2'-azobisméthylbutyronitrile.

S'agissant du promoteur de réticulation, il est entendu les cycloalcanes ayant 5 à 7 atomes de carbone, substitués par 1 à 3 groupements vinyle, allyle ou isopropenyl, les composés aromatiques substitués par 1 à 3 groupements vinyle, allyle ou isopropenyl, les monomères à base de méthacrylate, d'acrylate, maléimide, multi-substitués.

On peut citer à titre d'exemple le vinylcyclohexane, le divinylcyclohexane, le trivinylcyclohexane, le vinylcyclopentane, le di-isopropénylcyclohexane et le tri-isopropényl cyclohexane.

Le cyclohexane substitué par 1 à 3 groupements vinyle ou allyle est avantageusement utilisé, en particulier le trivinylcyclohexane.

Le trivinylcyclohexane commercial contient majoritairement le 1,2,4 trivinylcyclohexane.

Comme promoteur de réticulation de type aromatique multi-substitué, on peut citer le divinylbenzene, le diisopropenyl benzene, l'alpha methylstyrène, l'alpha methylstyrene dimère et le trimellitate de triallyle.

Comme promoteur de réticulation à base de méthacrylate multi-substitué, on peut citer l'ethylene glycol dimethacrylate, phenylene dimethacrylate, diethylene glycol dimethacrylate, triethylene glycol dimethacrylate, tetraethylene glycol dimethacrylate, polyethylene glycol 200 dimethacrylate, polyethylene glycol 400 dimethacrylate, 1,3-butanediol dimethacrylate, 1,4-butanediol dimethacrylate, 1,6-hexanediol dimethacrylate, 1,12-dodecanediol dimethacrylate, 1,3-glycerol dimethacrylate, diurethane dimethacrylate et le trimethylolpropane trimethacrylate.

Le promoteur de réticulation à base de méthacrylate multi-substitué est avantageusement utilisé, en particulier l'éthylène glycol dimethacrylate et le trimethylolpropane trimethacrylate.

Comme promoteur de réticulation à base d'acrylate multi-substitué, on peut citer le bisphenol A epoxy diacrylate, dipropylene glycol diacrylate, tripropylene glycol diacrylate, polyethylene glycol 600 diacrylate, ethylene glycol diacrylate, diethylene glycol diacrylate, triethylene glycol diacrylate, tetraethylene glycol diacrylate, neopentyl glycol ethoxylate diacrylate, butanediol diacrylate, hexanediol diacrylate, aliphatic urethane diacrylate, trimethylolpropane triacrylate, trimethylolpropane ethoxylate triacrylate, trimethylolpropane propoxylate triacrylate, glycerol propoxylate triacrylate, aliphatic urethane triacrylate, trimethylolpropane triacrylate et dipentaerythritol pentaacrylate.

Comme promoteur de réticulation azotés, on peut citer le cyanurate de triallyle, l'isocyanurate de triallyle, et le N,N' m-phénylène dimaléimide.

On peut aussi citer comme monomère multi-substitué par des groupements vinyliques, le butadiène, le chloroprène et l'isoprène.

Dans le cadre de la présente invention, le trivinylcyclohexane et le divinylbenzène seront choisis préférentiellement comme promoteur de réticulation.

Parmi les antioxydants, on peut citer ceux de la famille des hydroquinones, tel que l'hydroquinone, l'éther di(β-hydroxyéthylique) d'hydroquinone, l'éther monométhylique d'hydroquinone, la mono-tertiobutyl hydroquinone, la ditertiobutylhydroquinone et la ditertioamylhydroquinone ; on peut citer particulièrement les antioxydants de la famille des phénoliques, tels que le 2,2'-Thiodiethylene bis[3-(3,5-di-t-butyl-4-hydroxyphenyl)propionate], le 4,6-bis (octylthiomethyl)-o-cresol et le 4,4'-Thiobis(2-t-butyl-5-methylphenol).

La présente invention se rapporte à un mélange primaire comportant uniquement deux composants, à savoir l'initiateur de radicaux libres et le promoteur de réticulation. Une fois ce mélange primaire réalisé, il est destiné à imprégner du polyéthylène.

A cette composition (mélange primaire selon l'invention avec du polyéthylène), on peut alors ajouter différents composants pouvant comprendre des agents de protection UV ; des agents de mise en oeuvre, ayant pour fonction d'améliorer l'aspect final lors de sa mise en oeuvre, telles que les amides grasses, l'acide stéarique et ses sels, l'éthylène bis-stéaramide ou les polymères fluorés ; des agents anti-buée ; des agents anti-bloquants tels que la silice ou le talc ; des charges telles que le carbonate de calcium et des nanocharges comme par exemple les argiles ; des agents de couplage tels que les silanes ; des agents antistatiques ; des agents nucléants ; des pigments ; des colorants ; des plastifiants ; des fluidifiants et des additifs retardateurs de flamme tels que les hydroxydes d'aluminium ou de magnésium.

Selon l'invention un ou plusieurs retardateurs de réticulation peut être aussi introduit, après la réalisation/fabrication du mélange primaire selon l'invention, tels que les composés antioxydants de la famille des hydroquinones et des antioxydants phénoliques.

Ces additifs sont généralement utilisés dans des teneurs comprises entre 10 ppm et 10000 ppm en poids par rapport au poids de polymère final. Les plastifiants, les fluidifiants et les additifs retardateurs de flamme peuvent atteindre des quantités bien supérieures à 10000 ppm.

### Exemple de préparation d'un mélange primaire selon l'invention :

Tout d'abord, dix (10) grammes (g) de peroxyde de dicumyle sont ajoutés à 10 g de trivinylcyclohexane, l'ensemble est ensuite agité à une température de 50 °C (Celsius) pendant une durée de cinq (5) minutes, le mélange obtenu est homogène. A ce stade, le mélange primaire selon l'invention est obtenu.

Ensuite, 300 g de polyéthylène basse densité (LDPE) sont placés dans un contenant en verre, bouteille de type Schott de un (1) litre (L). Puis 6 g du mélange primaire préalablement chauffé à 60°C sont ajoutés au LDPE, le contenant refermé est placé sur un mélangeur à rouleaux à une vitesse de 15 t/min (tour par minute). Une fois le temps d'imprégnation atteint, le composant à base de LDPE est récupéré et peut être réticulé à la température appropriée (typiquement entre 170°C et 200°C).

### Tests réalisés :

### - Mesure du temps d'imprégnation

### Exemple 1 : initiateur de radicaux libres utilisé seul

300 g de polyéthylène basse densité (LDPE) préalablement chauffés à 60°C ont été placés dans un contenant en verre, bouteille de type Schott de 1 L (un litre). Puis 6 g de peroxyde de dicumyle préalablement chauffé à 60°C ont été ajoutés au LDPE, le contenant refermé a été placé sur un mélangeur à rouleaux à une vitesse de 15 t/min à 60 °C. A intervalle de temps régulier, 13 g du composant à base de LDPE sont prélevés dans la bouteille et sont placés dans 20 ml de méthanol pour être mélangés pendant 30 secondes (s) à l'aide d'une spatule en bois puis le mélange est filtré sur tamis. Le peroxyde non adsorbé est donc retiré de la surface du LDPE par le methanol, le peroxyde adsorbé restant dans les granulés de LDPE qui sont ensuite séchés sur tamis sous hotte aspirante puis analysés à l'aide d'un rhéomètre de type RPA2000.

L'évolution de la densité de réticulation est détaillée dans le tableau n°1 ci-dessous.

**Tableau n°1 : évolution des densités et cinétiques de réticulation en fonction du temps d'imprégnation pour le peroxyde de dicumyle utilisé seul.**

| **DCP 2 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 00:15:00 | Test 1 | 1,72 | 02:18 | | **1,69** | **02:21** | |
| | Test 2 | 1,65 | 02:24 | | | | |
| 00:30:00 | Test 1 | 2,63 | 02:27 | 01:41 | **2,65** | **02:22** | **01:38** |
| | Test 2 | 2,66 | 02:16 | 01:35 | | | |
| 00:45:00 | Test 1 | 3,43 | 02:17 | 01:09 | **3,57** | **02:17** | **01:07** |
| | Test 2 | 3,70 | 02:18 | 01:05 | | | |
| 02:10:00 | Test 1 | 10,63 | 02:04 | 00:34 | **11,16** | **02:04** | **00:34** |
| | Test 2 | 11,68 | 02:04 | 00:33 | | | |
| 03:10:00 | Test 1 | 14,20 | 01:59 | 00:31 | **14,59** | **02:00** | **00:31** |
| | Test 2 | 14,97 | 02:01 | 00:30 | | | |
| 04:00:00 | Test 1 | 18,45 | 02:00 | 00:29 | **18,38** | **02:00** | **00:30** |
| | Test 2 | 18,31 | 01:59 | 00:31 | | | |
| 05:00:00 | Test 1 | 20,39 | 02:00 | 00:28 | **20,05** | **01:59** | **00:28** |
| | Test 2 | 19,71 | 01:58 | 00:28 | | | |

### Exemple 2 : initiateur de radicaux libres préalablement mis en solution dans le promoteur de réticulation 1,2,4-trivinyl cyclohexane (composition 50/50)

300 g de polyéthylène basse densité (LDPE) préalablement chauffés à 60°C sont placés dans un contenant en verre, à savoir par exemple une bouteille de type Schott de 1 L. Puis 7,2 g d'un mélange contenant 50 % de peroxyde de dicumyle et 50 % de trivinylcyclohexane préalablement chauffé à 60 °C sont ajoutés au LDPE, le contenant refermé a été placé sur un mélangeur à rouleaux à une vitesse de 15 t/min à 60 °C. A intervalle de temps régulier, 13 g de composant à base de LDPE sont prélevés dans la bouteille et sont placés dans 20 millilitre (ml) de méthanol pour être mélangés pendant 30 secondes à l'aide d'une spatule en bois puis le mélange est filtré sur tamis. Le peroxyde non adsorbé est donc retiré de la surface du LDPE par le methanol, le peroxyde adsorbé restant dans les granulés de LDPE qui sont ensuite séchés sur tamis sous hotte aspirante puis analysés à l'aide d'un rhéomètre de type RPA2000.

L'évolution de la densité de réticulation est détaillée dans le tableau n°2 ci-dessous.

**Tableau n°2 : évolution des densités et cinétiques de réticulation en fonction du temps d'imprégnation pour le peroxyde de dicumyle préalablement mélangé avec le trivinylcyclohexane dans des proportions massiques 50% Peroxyde -50% Trivinylcyclohexane.**

| **DCP/TVCH 50/50 2,43 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 00:15:00 | Test 1 | 1,10 | 02:25 | | **1,09** | **02:31** | |
| | Test 2 | 1,08 | 02:38 | | | | |
| 00:30:00 | Test 1 | 4,01 | 02:27 | 01:09 | **4,21** | **02:29** | **01:07** |
| | Test 2 | 4,41 | 02:31 | 01:05 | | | |
| 02:10:00 | Test 1 | 16,60 | 02:19 | 00:36 | **16,84** | **02:20** | **00:36** |
| | Test 2 | 17,08 | 02:21 | 00:36 | | | |
| 04:00:00 | Test 1 | 17,89 | 02:26 | 00:37 | **18,15** | **02:24** | **00:37** |
| | Test 2 | 18,41 | 02:22 | 00:37 | | | |
| 05:00:00 | Test 1 | 21,62 | 02:26 | 00:37 | **21,44** | **02:28** | **00:39** |
| | Test 2 | 21,25 | 02:29 | 00:41 | | | |

### Exemple 3: initiateur de radicaux libre préalablement mis en solution dans le promoteur de réticulation 1,2,4-trivinyl cyclohexane (composition 75/25)

300 g de polyéthylène basse densité (LDPE) préalablement chauffés à 60°C ont été placés dans un contenant en verre, bouteille de type Schott de 1 L. Puis 5 g d'un mélange contenant 75 % de peroxyde de dicumyle et 25 % de trivinylcyclohexane préalablement chauffé à 60 °C ont été ajoutés au LDPE, le contenant refermé a été placé sur un mélangeur à rouleaux à une vitesse de 15 t/min à 60 °C. A intervalle de temps régulier, 13 g de composant à base de LDPE sont prélevés dans la bouteille et sont placés dans 20ml de méthanol pour être mélangés pendant 30 secondes à l'aide d'une spatule en bois puis le mélange est filtré sur tamis. Le peroxyde non adsorbé est donc retiré de la surface du LDPE par le methanol, le peroxyde adsorbé restant dans les granulés de LDPE qui sont ensuite séchés sur tamis sous hotte aspirante puis analysés à l'aide d'un rhéomètre de type RPA2000.

L'évolution de la densité de réticulation est détaillée dans le tableau n°3 ci-dessous

**Tableau n°3 : évolution des densités et cinétiques de réticulation en fonction du temps d'imprégnation pour le peroxyde de dicumyle préalablement mélangé avec le trivinylcyclohexane dans des proportions massiques 75% Peroxyde -25% Trivinylcyclohexane.**

| **DCP/TVCH 75/25 1,66 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 00:15:00 | Test 1 | 1,83 | 02:26 | | **1,80** | **02:25** | |
| | Test 2 | 1,77 | 02:25 | | | | |
| 00:30:00 | Test 1 | 3,92 | 02:29 | 01:09 | **3,95** | **02:28** | **01:08** |
| | Test 2 | 3,97 | 02:26 | 01:08 | | | |
| 01:00:00 | Test 1 | 10,44 | 02:15 | 00:38 | **10,36** | **02:15** | **00:39** |
| | Test 2 | 10,28 | 02:14 | 00:39 | | | |
| 01:30:00 | Test 1 | 14,48 | 02:07 | 00:33 | **14,40** | **02:08** | **00:34** |
| | Test 2 | 14,31 | 02:09 | 00:34 | | | |
| 02:00:00 | Test 1 | 17,11 | 02:04 | 00:32 | **17,04** | **02:05** | **00:33** |
| | Test 2 | 16,97 | 02:06 | 00:33 | | | |
| 02:30:00 | Test 1 | 16,30 | 02:03 | 00:33 | **16,91** | **02:00** | **00:32** |
| | Test 2 | 17,52 | 01:57 | 00:30 | | | |
| 05:00:00 | Test 1 | 21,22 | 02:04 | 00:33 | **21,10** | **02:06** | **00:35** |
| | Test 2 | 20,98 | 02:08 | 00:36 | | | |

### Exemple 4: initiateur de radicaux libre préalablement mis en solution dans le promoteur de réticulation divinyl benzene(composition 50/50)

300 g de polyéthylène basse densité (LDPE) préalablement chauffés à 60°C ont été placés dans un contenant en verre, bouteille de type Schott de 1 L. Puis 7,2 g d'un mélange contenant 50 % de peroxyde de dicumyle et 50 % de trivinylcyclohexane préalablement chauffé à 60 °C ont été ajoutés au LDPE, le contenant refermé a été placé sur un mélangeur à rouleaux à une vitesse de 15 t/min à 60 °C. A intervalle de temps régulier, 13 g de composant à base de LDPE sont prélevés dans la bouteille et sont placés dans 20 ml de méthanol pour être mélangés pendant 30 secondes à l'aide d'une spatule en bois puis le mélange est filtré sur tamis. Le peroxyde non adsorbé est donc retiré de la surface du LDPE par le methanol, le peroxyde adsorbé restant dans les granulés de LDPE qui sont ensuite séchés sur tamis sous hotte aspirante puis analysés à l'aide d'un rhéomètre de type RPA2000.

L'évolution de la densité de réticulation est détaillée dans le tableau n°4 ci-dessous.

**Tableau n°4 : évolution des densités et cinétiques de réticulation en fonction du temps d'imprégnation pour le peroxyde de dicumyle préalablement mélangé avec le divinyl benzene dans des proportions massiques 50% Peroxyde -50 % divinyl benzene.**

| **DCP/DVB 50/50 2,43 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 00:15:00 | Test 1 | 0.801 | 02:26 | | **0,80** | **02:26** | |
| | Test 2 | | | | | | |
| 00:30:00 | Test 1 | 2,868 | 02:27 | 01:28 | **2,82** | **02:24** | **01:29** |
| | Test 2 | 2.779 | 02:22 | 01:31 | | | |
| 00:45:00 | Test 1 | 4.369 | 02:18 | 00:55 | **4,40** | **02:18** | **00:54** |
| | Test 2 | 4.428 | 02:18 | 00:54 | | | |
| 02:10:00 | Test 1 | 14.56 | 02:04 | 00:29 | **14,61** | **02:05** | **00:29** |
| | Test 2 | 14.65 | 02:07 | 00:29 | | | |
| 03:10:00 | Test 1 | 17.85 | 02:01 | 00:27 | **17,92** | **02:01** | **00:27** |
| | Test 2 | 17.79 | 02:01 | 00:27 | | | |
| 04:00:00 | Test 1 | 18.12 | 02:02 | 00:28 | **18,52** | **02:01** | **00:27** |
| | Test 2 | 18.58 | 02:00 | 00:27 | | | |
| 05:00:00 | Test 1 | 18.46 | 01:59 | 00:27 | **18,48** | **01:59** | **00:27** |
| | Test 2 | 18.48 | 02:00 | 00:27 | | | |

Le graphe n°1 ci-dessous présente la comparaison des valeurs de densité de réticulation obtenues au rhéomètre de type RPA 2000 entre les 4 systèmes, c'est-à-dire les exemples n°1, n°2 n°3 et n°4 décrits ci-dessus.

Nous voyons clairement que le fait de mélanger au préalable le peroxyde avec le trivinylcyclohexane entraîne une réduction très significative du temps d'adsorption. Après deux heures de mélangeage, par exemple, les deux échantillons de polyéthylène additivés des mélanges le trivinyl cyclohexane plus peroxyde de dicumyle montrent une densité de réticulation supérieur à 16 dN.m, alors qu'il faut environ quatre heures pour attendre cette même densité de réticulation avec le peroxyde de dicumyle ajouté seul au polyethylène (exemple n°1).

L'utilisation du divinyl benzène améliore aussi l'absorption du peroxyde de dicumyle : le mélange contenant cet additif nécessite de 3 h pour atteindre une densité de réticulation de 16 dN.m.

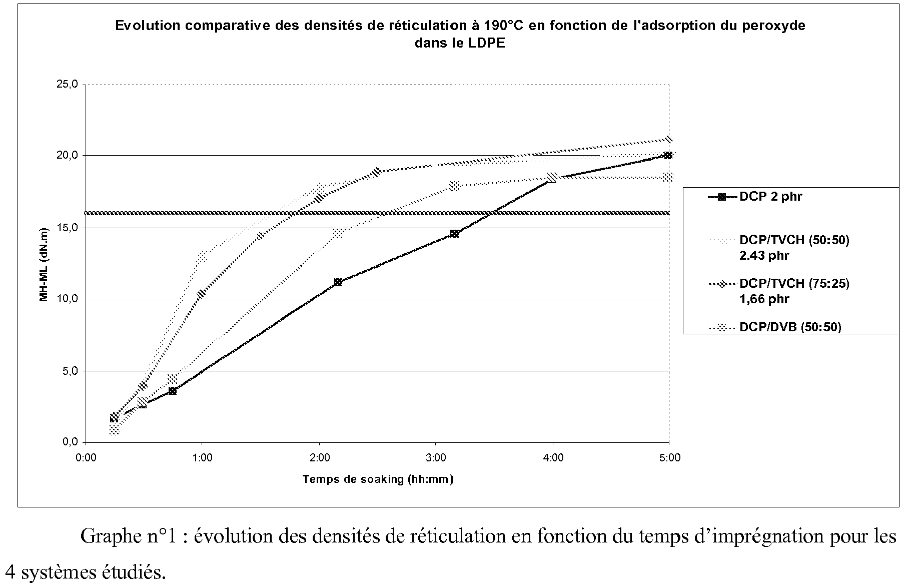

### - Mesure du temps de désorption

### Exemple 5 : initiateur de radicaux libres utilisé seul

300 g de polyéthylène basse densité (LDPE) sont placés dans un contenant en verre, plus précisément par exemple une bouteille de type Schott de 1 L. Puis 6 g de peroxyde de dicumyle préalablement chauffé à 60 °C ont été ajoutés au LDPE, le contenant refermé a été placé sur un mélangeur à rouleaux à une vitesse de 15 t/min à 60 °C. Une fois le temps d'imprégnation atteint, la bouteille est placée dans un contenant hermétique à la température de 5 °C. A intervalle de temps régulier, 13 g de composant à base de LDPE sont prélevés dans la bouteille et sont placés dans 20 ml de méthanol pour être mélangés pendant 30 secondes à l'aide d'une spatule en bois puis le mélange est filtré sur tamis. Les granulés de LDPE sont ainsi débarrassés du peroxyde qui se serait désorbé. Les granulés sont ensuite séchés sur tamis sous hotte aspirante puis analysés à l'aide d'un rhéomètre de type RPA2000.

L'évolution de la densité de réticulation est détaillée dans le tableau n°5 ci-dessous qui montre qu'une désorption a lieu dès la première journée dans le cas du peroxyde de dicumyle utilisé seul.

| **DCP 2 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 0 j | Test 1 | 20,39 | 02:00 | 00:28 | **20,05** | **01:59** | **00:28** |
| | Test 2 | 19.71 | 01:58 | 00:28 | | | |
| 1 j | Test 1 | 14,85 | 01:58 | 00:31 | **14,60** | **01:59** | **00:31** |
| | Test 2 | 14.35 | 02:00 | 00:31 | | | |
| 2 j | Test 1 | 14.32 | 01:59 | 00:32 | **14,49** | **01:59** | **00:32** |
| | Test 2 | 14.66 | 01:59 | 00:31 | | | |
| 3 j | Test 1 | 14.73 | 02:00 | 00:31 | **14,62** | **02:00** | **00:31** |
| | Test 2 | 14,51 | 02:00 | 00:31 | | | |
| 4 j | Test 1 | 14.19 | 02:03 | 00:32 | **14,29** | **02:01** | **00:32** |
| | Test 2 | 14,39 | 02:00 | 00:32 | | | |
| 5 j | Test 1 | 14.27 | 02:03 | 00:31 | **14,44** | **02:01** | **00:31** |
| | Test 2 | 14,60 | 01:59 | 00:30 | | | |

### Exemple 6: initiateur de radicaux libre préalablement mis en solution dans un promoteur de réticulation (composition 50/50)

300 g de polyéthylène basse densité (LDPE) sont placés dans un contenant en verre, une bouteille de type Schott de 1 L. Puis 7,2 g d'un mélange contenant 50 % de peroxyde de dicumyle et 50 % de trivinylcyclohexane préalablement chauffé à 60 °C est ajouté au LDPE, le contenant refermé a été placé sur un mélangeur à rouleaux à une vitesse de 15 t/min à 60 °C. Une fois le temps d'imprégnation atteint, la bouteille est placée dans un contenant hermétique à 5 °C. A intervalle de temps régulier, 13 g de composant à base de LDPE sont prélevés dans la bouteille et sont placés dans 20 ml de méthanol pour être mélangés pendant 30 secondes à l'aide d'une spatule en bois puis le mélange est filtré sur tamis. Les granulés de LDPE sont ainsi débarrassés du peroxyde qui se serait désorbé, ils sont ensuite séchés sur tamis sous hotte aspirante puis analysés à l'aide d'un rhéomètre de type RPA2000. L'évolution de la densité de réticulation est détaillée dans le tableau n°6 ci-dessous qui montre qu'aucune désorption n'est détectée les cinq (5) premiers jours dans le cas du peroxyde de dicumyle utilisé préalablement mélangé avec le trivinylcyclohexane dans des proportions massiques 50% Peroxyde - 50% Trivinylcyclohexane.

**Tableau n°6 : évolution des densités et cinétiques de réticulation en fonction du temps de stockage à 5°C pour le peroxyde de dicumyle préalablement mélangé avec le trivinylcyclohexane dans des proportions massiques 50% Peroxyde -50% Trivinylcyclohexane.**

| **50/50 2,43 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 0 j | Test 1 | 20.41 | 02:20 | 00:35 | **20,80** | **02:20** | **00:35** |
| | Test 2 | 20.80 | 02:19 | 00:35 | | | |
| 1 j | Test 1 | 21,08 | 02:36 | 00:35 | **20,69** | **02:30** | **00:36** |
| | Test 2 | 20.30 | 02:24 | 00:36 | | | |
| 2 j | Test 1 | 20.78 | 02:26 | 00:36 | **20,55** | **02:24** | **00:36** |
| | Test 2 | 20,31 | 02:22 | 00:36 | | | |
| 3 j | Test 1 | 20.28 | 02:27 | 00:35 | **20,32** | **02:25** | **00:36** |
| | Test 2 | 20.35 | 02:23 | 00:36 | | | |
| 4 j | Test 1 | 20,24 | 02:19 | 00:35 | **20,57** | **02:20** | **00:35** |
| | Test 2 | 20.89 | 02:21 | 00:35 | | | |
| 5 j | Test 1 | 20.38 | 02:23 | 00:36 | **20,76** | **02:22** | **00:36** |
| | Test 2 | 21,13 | 02:22 | 00:35 | | | |

### Exemple 7 : initiateur de radicaux libre préalablement mis en solution dans un promoteur de réticulation (composition 75/25)

300 g de polyéthylène basse densité (LDPE) sont placés dans un contenant en verre, soit une bouteille de type Schott de 1 L. Puis 7,2 g d'un mélange contenant 50 % de peroxyde de dicumyle et 50 % de trivinylcyclohexane préalablement chauffé à 60 °C ont été ajoutés au LDPE, le contenant refermé a été placé sur un mélangeur à rouleaux à une vitesse de 15 t/min à 60 °C. Une fois le temps d'imprégnation atteint, la bouteille est placée dans un contenant (adiabatique) à 5 °C. A intervalle de temps régulier, 13 g de composant à base de LDPE sont prélevés dans la bouteille et sont placés dans 20 ml de méthanol pour être mélangés pendant 30 secondes à l'aide d'une spatule en bois puis le mélange est filtré sur tamis. Les granulés de LDPE sont ainsi débarrassés du peroxyde qui se serait désorbé, ils sont ensuite séchés sur tamis sous hotte aspirante puis analysés à l'aide d'un rhéomètre de type RPA2000. L'évolution de la densité de réticulation est détaillée dans le tableau n°7 ci-dessous qui montre qu'aucune désorption n'est détectée les cinq (5) premiers jours dans le cas du peroxyde de dicumyle utilisé préalablement mélangé avec le trivinylcyclohexane dans des proportions massiques 75 % Peroxyde - 25 % Trivinylcyclohexane.

**Tableau n°7 : évolution des densités et cinétiques de réticulation en fonction du temps de stockage à 5°C pour le peroxyde de dicumyle préalablement mélangé avec le trivinylcyclohexane dans des proportions massiques 75% Peroxyde - 25% Trivinylcyclohexane.**

| **75/25 1,66 phr** | | RPA@190°C | | | **Valeurs moyennes** | | |
|---|---|---|---|---|---|---|---|
| Prélèvement | N° test | M_{H}-M_{L} (dNm) | t₉₀ (m:s) | ts2 (m:s) | **M_{H}-M_{L} (dNm)** | **t₉₀ (m:s)** | **ts2 (m:s)** |
| 0 j | Test 1 | 19.27 | 02:03 | 00:31 | **18,88** | **02:04** | **00:32** |
| | Test 2 | 18.49 | 02:05 | 00:32 | | | |
| 1 j | Test 1 | 19,57 | 02:05 | 00:32 | **19,71** | **02:05** | **00:32** |
| | Test 2 | 19.84 | 02:05 | 00:32 | | | |
| 2 j | Test 1 | 20.02 | 02:04 | 00:32 | **20,06** | **02:03** | **00:32** |
| | Test 2 | 20,09 | 02:03 | 00:32 | | | |
| 3 j | Test 1 | 19.75 | 02:06 | 00:31 | **19,91** | **02:06** | **00:32** |
| | Test 2 | 20.06 | 02:05 | 00:32 | | | |
| 4 j | Test 1 | 19,82 | 02:01 | 00:31 | **19,71** | **02:03** | **00:32** |
| | Test 2 | 19.59 | 02:05 | 00:32 | | | |
| 5 j | Test 1 | 19.75 | 02:06 | 00:33 | **19,75** | **02:05** | **00:32** |
| | Test 2 | 19,75 | 02:03 | 00:31 | | | |

Le graphe n°2 ci-dessous présente la comparaison des valeurs de densité de réticulation obtenues au rhéomètre de type RPA 2000 entre les 3 systèmes (exemples n°5, n°6 et n°7 présentés ci-dessus).

Nous voyons clairement que le fait de mélanger au préalable le peroxyde ralentit de manière très significative le phénomène de désorption, puisque aucune désorption n'a été détectée au bout de cinq (5) jours à 5 °C alors que la référence (exemple n°5), le peroxyde utilisé seul, désorbe dès la première journée dans les conditions expérimentales choisies.

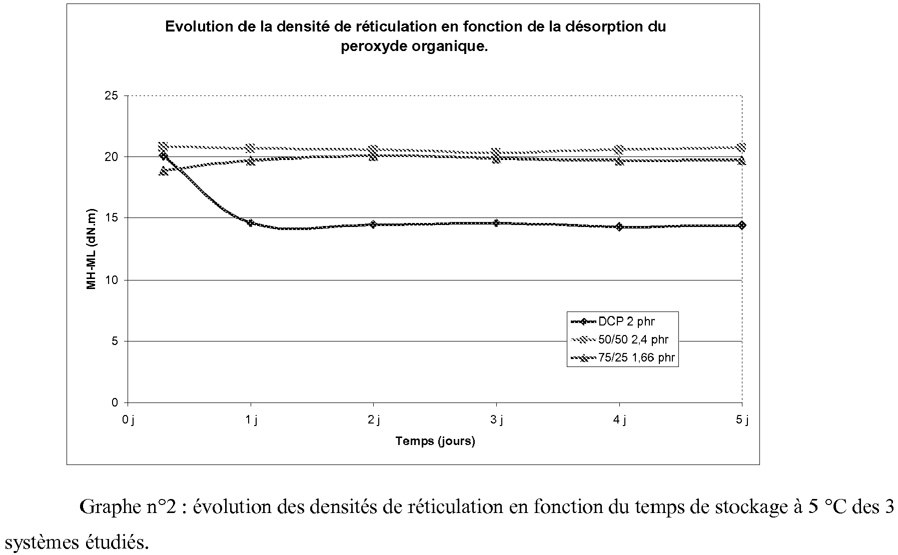

La présente invention permet de réduire de manière significative les produits volatils, et plus particulièrement le méthane, qui sont majoritairement issus de la décomposition du peroxyde organique. En effet il a été montré que la présente invention permet de d'obtenir des niveaux de réticulation acceptables en utilisant jusqu'à 40% de moins de peroxyde organique, en conséquence la quantité de produits volatils se trouve également réduite, cette réduction allant jusqu'à 40%.

## Revendications

1. Mélange primaire destiné à la réticulation de polyéthylène, comprenant au moins un initiateur de radicaux libres choisi parmi les peroxydes organiques, les azoïques ou leurs mélanges **caractérisé en ce qu'**il consiste en ledit initiateur de radicaux libres et au moins un promoteur de réticulation choisi parmi les cycloalcanes ayant 5 à 7 atomes de carbone, substitués par 1 à 3 groupements vinyle, allyle ou isopropenyl, les composés aromatiques substitués par 1 à 3 groupements vinyle, allyle ou isopropenyl, les monomères à base de méthacrylate, d'acrylate, maléimide, multi-substitués et **en ce que** le rapport en poids d'initiateur de radicaux libres au promoteur de réticulation est supérieur ou égal à 1, de préférence entre 1,5 et 4.

2. Mélange selon la revendication 1, **caractérisé en ce que** le promoteur de réticulation est le trivinylcycloalcane ou divinylbenzène.

3. Mélange selon la revendication 1 ou 2, **caractérisé en ce que** l'initiateur de radicaux libres est le peroxyde de dicumyle, le 2, 5-diméthyl-2,5 di(t-butylperoxy)hexane ou le di-[(t-butyl-peroxy)isopropyl]benzène ou un mélanges de ces initiateurs.

4. Mélange selon l'une quelconque des revendications précédentes, **caractérisé en ce qu'**il se présente sous forme liquide à température ambiante, soit au moins pour une température comprise entre 10 °C et 50 °C à pression ambiante (1 bar).

5. Composition pour la réticulation de polyéthylène, comportant du polyéthylène, de préférence du polyéthylène basse densité, **caractérisée en ce qu'**elle comprend en outre un mélange primaire selon l'une quelconque des revendications précédentes.

6. Composition selon la revendication 5, **caractérisée en ce qu'**elle comprend en outre au moins un agent de protection UV, un agent de mise en oeuvre, un agent anti-buée, un agent anti-bloquant, un agent de couplage, un pigment, un colorant, un plastifiant, un fluidifiant, un retardateur de flamme et/ou un retardateur de réticulation.

7. Procédé de fabrication de polyéthylène réticulé, comportant une étape finale de réticulation de polyéthylène, dans lequel :
- un initiateur de radicaux libres est choisi parmi peroxydes organiques, les azoïques ou leurs mélanges, de préférence ledit initiateur est choisi parmi le peroxyde de dicumyle, le 2, 5-diméthyl-2,5 di(t-butylperoxy)hexane ou le di-[(t-butyl-peroxy)isopropyl]benzène ou un mélange de ces initiateurs, et dans lequel
- au moins un promoteur de réticulation est choisi parmi les cycloalcanes ayant 5 à 7 atomes de carbone, substitués par 1 à 3 groupements vinyle, allyle ou isopropenyl, les composés aromatiques substitués par 1 à 3 groupements vinyle, allyle ou isopropenyl, les monomères à base de méthacrylate, d'acrylate, maléimide, multi-substitués, de préférence ledit promoteur est choisi parmi le trivinylcycloalcane et/ou divinylbenzène,
**caractérisé en ce qu'**on réalise initialement une étape de dilution du susdit initiateur de radicaux libres avec le susdit promoteur de réticulation, puis on réalise l'imprégnation du mélange primaire ainsi formé selon l'une des revendications 1 à 5, sous forme liquide, avec du polyéthylène.

8. Procédé selon la revendication 7, **caractérisé en ce que** lors de la susdite étape de dilution, le promoteur de réticulation est présent sous forme liquide à température et pression ambiante, c'est-à-dire pour une température comprise entre 10 °C et 50 °C à une pression de 1 bar.

9. Procédé selon la revendication 7 ou 8, **caractérisé en ce que** l'étape de réticulation est réalisée par extrusion ou par injection.

10. Utilisation du mélange primaire selon les revendications 1 à 4 ou de la composition selon la revendication 5 ou 6 pour la production de câbles, notamment pour le transport de fluide ou de courant électrique.

## Patentansprüche

1. Primärmischung zur Vernetzung von Polyethylen, umfassend mindestens einen Radikalinitiator, der aus organischen Peroxiden, Azoverbindungen oder Mischungen davon ausgewählt ist, dadurch gekenn-zeich¬net, dass sie aus dem Radikalinitiator und mindestens einem Vernetzungspromotor, der aus Cycloalkanen mit 5 bis 7 Kohlenstoffatomen, die durch 1 bis 3 Vinyl-, Allyl- oder Isopropenyl-gruppen substituiert sind, aromatischen Verbin-dun¬gen, die durch 1 bis 3 Vinyl-, Allyl- oder Isopropenyl¬gruppen substituiert sind, mehrfach substituierten Monomeren auf Basis von Methacry-lat, Acrylat oder Maleinimid ausgewählt ist, besteht und dass das Gewichtsverhältnis von Radikal¬initiator zu Vernetzungspromotor größer gleich 1 ist und vorzugsweise zwischen 1,5 und 4 liegt.

2. Mischung nach Anspruch 1, **dadurch gekennzeichnet, dass** es sich bei dem Vernetzungspromotor um Trivinylcycloalkan oder Divinylbenzol handelt.

3. Mischung nach Anspruch 1 oder 2, **dadurch gekennzeichnet, dass** es sich bei dem Radikal-initiator um Dicumylperoxid, 2,5-Dimethyl-2,5-di(t-butylperoxy)hexan oder Di[(t-butylperoxy)-isopropyl]benzol oder eine Mischung dieser Initiatoren handelt.

4. Mischung nach einem der vorhergehenden Ansprüche, **dadurch gekennzeichnet, dass** sie bei Raum¬temperatur, d.h. mindestens für eine Temperatur zwischen 10°C und 50°C bei Umgebungs-druck (1 bar), in flüssiger Form vorliegt.

5. Zusammensetzung zur Vernetzung von Polyethylen, umfassend Polyethylen, vorzugsweise Polyethylen niederer Dichte, **dadurch gekennzeichnet, dass** sie außerdem eine Primärmischung nach einem der vorhergehenden Ansprüche umfasst.

6. Zusammensetzung nach Anspruch 5, dadurch gekenn-zeich¬net, dass sie außerdem mindestens ein UV-Schutzmittel, ein Verarbeitungshilfsmittel, ein Antischleiermittel, ein Antiblockmittel, einen Haftvermittler, ein Pigment, einen Farbstoff, einen Weichmacher, ein Fließmittel, ein Flamm-schutz¬mittel und/oder einen Vernetzungsverzögerer umfasst.

7. Verfahren zur Herstellung von vernetztem Polyethylen mit einem abschließenden Schritt der Vernetzung von Polyethylen, bei dem:
- ein Radikalinitiator aus organischen Peroxiden, Azoverbindungen oder Mischungen davon ausgewählt wird, wobei der Initiator vorzugsweise aus Dicumylperoxid, 2,5-Dimethyl-2,5-di(t-butyl¬peroxy)¬hexan oder Di[(t-butylperoxy)¬isopropyl]¬benzol oder einer Mischung dieser Initiatoren ausgewählt wird, und bei dem
- mindestens ein Vernetzungspromotor aus Cyclo-alkanen mit 5 bis 7 Kohlenstoffatomen, die durch 1 bis 3 Vinyl-, Allyl- oder Isopropenyl¬gruppen substituiert sind, aromatischen Verbin¬dun¬gen, die durch 1 bis 3 Vinyl-, Allyl- oder Isopropenyl¬gruppen substituiert sind, mehrfach substituierten Monomeren auf Basis von Methacry-lat, Acrylat oder Maleinimid ausgewählt wird, wobei der Promotor vorzugsweise aus Trivinylcycloalkan und/oder Divinylbenzol ausgewählt wird,
**dadurch gekennzeichnet, dass** zunächst ein Schritt der Verdünnung des Radikalinitiators mit dem Vernetzungspromotor durchgeführt wird und dann die Imprägnierung der so gebildeten Primärmischung nach einem der Ansprüche 1 bis 5 in flüssiger Form mit dem Polyethylen durchgeführt wird.

8. Verfahren nach Anspruch 7, **dadurch gekennzeichnet, dass** bei dem obigen Verdünnungsschritt der Vernetzungspromotor bei Umgebungstemperatur und Umgebungsdruck, d.h. für eine Temperatur zwischen 10°C und 50°C bei einem Druck von 1 bar, in flüssiger Form vorliegt.

9. Verfahren nach Anspruch 7 oder 8, **dadurch gekennzeichnet, dass** der Vernetzungsschritt durch Extrusion oder durch Spritzguss durchgeführt wird.

10. Verwendung der Primärmischung nach den Ansprüchen 1 bis 4 oder der Zusammensetzung nach Anspruch 5 oder 6 zur Herstellung von Kabeln, insbesondere zum Transport von Fluiden oder Strom.

## Claims

1. A primer mixture intended for crosslinking polyethylene, comprising at least one free-radical initiator chosen from organic peroxides, azo compounds or mixtures thereof, **characterized in that** it consists of said free-radical initiator and at least one crosslinking promoter chosen from cycloalkanes containing 5 to 7 carbon atoms, substituted with 1 to 3 vinyl, allyl or isopropenyl groups, aromatic compounds substituted with 1 to 3 vinyl, allyl or isopropenyl groups, multi-substituted monomers based on methacrylate, acrylate, maleimide and **in that** the weight ratio of free-radical initiator to crosslinking promoter is greater than or equal to 1 and preferably between 1.5 and 4.

2. The mixture as claimed in claim 1, **characterized in that** the crosslinking promoter is trivinylcycloalkane or divinylbenzene.

3. The mixture as claimed in claim 1 or 2, **characterized in that** the free-radical initiator is dicumyl peroxide, 2,5-dimethyl-2,5-bis(t-butylperoxy)hexane or bis[(t-butylperoxy)isopropyl]benzene or a mixture of these initiators.

4. The mixture as claimed in any one of the preceding claims, **characterized in that** it is in liquid form at room temperature, i.e. at least for a temperature of between 10°C and 50°C at ambient pressure (1 bar).

5. A composition for crosslinking polyethylene, comprising polyethylene, preferably low-density polyethylene, **characterized in that** it also comprises a primer mixture as claimed in any one of the preceding claims.

6. The composition as claimed in claim 5, **characterized in that** it also comprises at least one UV stabilizer, a processing agent, an antifogging agent, an antiblocking agent, a coupler, a pigment, a dye, a plasticizer, a fluidizer, a flame retardant and/or a crosslinking retardant.

7. A process for manufacturing crosslinked polyethylene, comprising a final step of crosslinking polyethylene, in which:
- a free-radical initiator is chosen from organic peroxides, azo compounds or mixtures thereof, and preferably said initiator is chosen from dicumyl peroxide, 2,5-dimethyl-2,5-bis(t-butylperoxy)hexane and bis[(t-butylperoxy)isopropyl]benzene or a mixture of these initiators, and in which
- at least one crosslinking promoter is chosen from cycloalkanes containing 5 to 7 carbon atoms, substituted with 1 to 3 vinyl, allyl or isopropenyl groups, aromatic compounds substituted with 1 to 3 vinyl, allyl or isopropenyl groups, multi-substituted monomers based on methacrylate, acrylate, maleimide, preferably said promoter is chosen from trivinylcycloalkane and/or divinylbenzene,
**characterized in that** a step of dilution of said free-radical initiator with said crosslinking promoter is initially performed, and impregnation of the primer mixture thus formed as claimed in one of claims 1 to 5, in liquid form, with polyethylene is then performed.

8. The process as claimed in claim 7, **characterized in that**, during the abovementioned dilution step, the crosslinking promoter is present in liquid form at room temperature and pressure, i.e. for a temperature of between 10°C and 50°C at a pressure of 1 bar.

9. The process as claimed in claim 7 or 8, **characterized in that** the crosslinking step is performed by extrusion or by injection-molding.

10. The use of the primer mixture as claimed in claims 1 to 4 or of the composition as claimed in claim 5 or 6, for the production of cables, especially for transporting fluid or electrical current.
